# EUROPÄISCHE PATENTANMELDUNG

(11) **EP 3 795 850 A1**
(43) Veröffentlichungstag der Anmeldung: **24.03.2021**
(21) Anmeldenummer: 20200954.4
(22) Anmeldetag: 10.08.2016
(51) Int. Cl.: F16D 25/08, F16D 25/0638, F16D 25/10, F16D 21/06, H02K 7/108

(54) **KUPPLUNGSEINRICHTUNG FÜR HYBRIDANTRIEB**

(30) Priorität: 20.08.2015 DE 102015215875
(62) Teilanmeldung aus: 16770439.4
(71) Anmelder: Schaeffler Technologies AG & Co. KG, 91074 Herzogenaurach (DE)
(72) Erfinder: LORENZ, Elmar, 77836 Rheinmünster Söllingen (DE)

(57) **Zusammenfassung**

Die Erfindung betrifft eine Kupplungseinrichtung mit einer ersten und einer zweiten Eingangsseite, einer ersten und einer zweiten Ausgangsseite, wobei die erste Eingangsseite mit einem ersten Antriebsmotor und die zweite Eingangsseite mit einem zweiten Antriebsmotor koppelbar ist, wobei die Eingangsseiten und die Ausgangsseiten um eine gemeinsame Drehachse drehbar sind, einer ersten Kupplung zwischen der ersten Eingangsseite und der ersten Ausgangsseite, einer zweiten Kupplung zwischen der ersten Eingangsseite und der zweiten Ausgangsseite, und einer dritten Kupplung zwischen der ersten Eingangsseite und der zweiten Eingangsseite, wobei die dritte Kupplung versetzt zu der ersten Kupplung und/oder der zweiten Kupplung angeordnet ist.

## Beschreibung

Die Erfindung betrifft eine Kupplungseinrichtung. Insbesondere betrifft die Erfindung eine Kupplungseinrichtung für einen Hybridantrieb.

Ein Kraftfahrzeug verfügt über einen ersten Antriebsmotor, der als elektrische Maschine ausgeführt ist, und einen zweiten Antriebsmotor, der als Verbrennungsmotor ausgeführt ist. Der Antrieb des Kraftfahrzeugs kann hybrid, also in einer beliebigen Kombination des ersten und/oder zweiten Antriebsmotors, erfolgen. Dazu ist zwischen den Antriebsmotoren und einem Getriebe des Kraftfahrzeugs eine Kupplungseinrichtung vorgesehen.

DE 10 2009 059 944 A1 betrifft eine Kupplungseinrichtung für ein hybrid antreibbares Kraftfahrzeug.

Der Erfindung liegt die Aufgabe zu Grunde, weitere Varianten für die Gestaltung einer Kupplungseinrichtung anzugeben, die auch in einem Hybridantrieb verwendet werden kann. Die Erfindung löst diese Aufgabe mittels des Gegenstands des unabhängigen Anspruchs. Unteransprüche geben bevorzugte Ausführungsformen wieder.

Es wurde erkannt, dass eine verbesserte Kupplungseinrichtung dadurch bereitgestellt werden kann, dass die Kupplungseinrichtung eine erste und eine zweite Eingangsseite sowie eine erste und zweite Ausgangsseite umfasst. Die erste Eingangsseite ist mit einem ersten Antriebsmotor und die zweite Eingangsseite mit einem zweiten Antriebsmotor koppelbar. Die Eingangsseiten und die Ausgangsseiten sind um eine gemeinsame Drehachse drehbar. Ferner umfasst die Kupplungseinrichtung eine erste Kupplung, die zwischen der ersten Eingangsseite und der ersten Ausgangsseite, eine zweite Kupplung, die zwischen der ersten Eingangsseite und der zweiten Ausgangsseite, und eine dritte Kupplung, die zwischen der ersten Eingangsseite und der zweiten Eingangsseite angeordnet ist. Die dritte Kupplung ist versetzt zu der ersten Kupplung und/oder der zweiten Kupplung angeordnet.

Dadurch wird eine hohe Flexibilität bei einer Konstruktion einer Kupplungseinrichtung, die für einen hybriden Antriebsstrang eines Kraftfahrzeugs dienen soll, bereitgestellt. Dabei ist von besonderem Vorteil, wenn die Kupplungseinrichtung als nasse Kupplungseinrichtung ausgebildet ist. Ferner ist eine hohe Variabilität durch die unterschiedliche Zusammenstellbarkeit der Kupplungseinrichtung in ihrer Anordnung der Kupplungen möglich.

In einer weiteren Ausführungsform sind die erste Kupplung und die zweite Kupplung radial abschnittsweise überlappend angeordnet. Ferner ist axial angrenzend an die erste Kupplung auf einer zur zweiten Kupplung abgewandten Seite die dritte Kupplung angeordnet. Alternativ ist axial angrenzend an die zweite Kupplung auf einer zur ersten Kupplung abgewandten Seite die dritte Kupplung angeordnet.

In einer weiteren Ausführungsform sind die erste Kupplung und die zweite Kupplung radial abschnittsweise überlappend angeordnet. Ferner ist radial innenseitig zur ersten Kupplung die dritte Kupplung angeordnet. Die erste Kupplung und die dritte Kupplung sind axial zumindest abschnittsweise überlappend angeordnet. Alternativ ist radial innenseitig zur zweiten Kupplung die dritte Kupplung angeordnet und sind die zweite Kupplung und die dritte Kupplung axial zumindest abschnittsweise überlappend angeordnet.

In einer weiteren Ausführungsform sind die erste Kupplung und die zweite Kupplung radial zumindest abschnittsweise überlappend angeordnet. Dabei ist radial außenseitig zur ersten Kupplung die dritte Kupplung angeordnet. Die erste Kupplung ist axial überlappend zu der dritten Kupplung angeordnet. Alternativ ist radial außenseitig zur zweiten Kupplung die dritte Kupplung angeordnet. Auch sind die zweite Kupplung und die dritte Kupplung axial überlappend angeordnet.

In einer weiteren Ausführungsform sind die erste Kupplung und die zweite Kupplung axial zumindest abschnittweise überlappend angeordnet, wobei die erste Kupplung radial versetzt zu der zweiten Kupplung angeordnet ist. Die dritte Kupplung ist radial außenseitig zur ersten Kupplung oder radial außenseitig zur zweiten Kupplung angeordnet. Vorzugsweise ist die dritte Kupplung axial versetzt zur ersten Kupplung und/oder der zweiten Kupplung angeordnet. Alternativ ist die dritte Kupplung zumindest abschnittsweise axial überlappend mit der ersten Kupplung und/oder mit der zweiten Kupplung angeordnet.

In einer weiteren Ausführungsform sind die erste Kupplung und die zweite Kupplung radial versetzt zueinander angeordnet, wobei die erste Kupplung und die zweite Kupplung axial zumindest abschnittsweise überlappend angeordnet sind. Die dritte Kupplung ist axial versetzt zu der ersten Kupplung und der zweiten Kupplung angeordnet. Die dritte Kupplung ist radial überlappend mit der ersten Kupplung und der zweiten Kupplung angeordnet.

In einer weiteren Ausführungsform ist die erste Kupplung radial außenseitig oder radial innenseitig zu der zweiten Kupplung angeordnet.

In einer weiteren Ausführungsform ist die dritte Kupplung axial versetzt zu der ersten Kupplung und/oder der zweiten Kupplung angeordnet.

In einer weiteren Ausführungsform ist die dritte Kupplung radial versetzt zu der ersten Kupplung und/oder der zweiten Kupplung angeordnet.

Nachfolgend wird die Erfindung anhand von Figuren näher erläutert. Dabei zeigen:
Figur 1 einen Halblängsschnitt durch eine exemplarische Kupplungseinrichtung gemäß einer ersten Ausführungsform;
Figur 2 eine schematische Darstellung eines Halblängsschnitts der in Figur 1 gezeigten Kupplungseinrichtung;
Figur 3 eine schematische Darstellung eines Halblängsschnitts einer Kupplungseinrichtung gemäß einer zweiten Ausführungsform;
Figur 4 eine schematische Darstellung eines Halblängsschnitts einer Kupplungseinrichtung gemäß einer dritten Ausführungsform;
Figur 5 eine schematische Darstellung eines Halblängsschnitts einer Kupplungseinrichtung gemäß einer vierten Ausführungsform;
Figur 6 eine schematische Darstellung eines Halblängsschnitts einer Kupplungseinrichtung gemäß einer fünften Ausführungsform;
Figur 7 eine schematische Darstellung eines Halblängsschnitts einer Kupplungseinrichtung gemäß einer sechsten Ausführungsform; und
Figur 8 eine schematische Darstellung eines Halblängsschnitts einer Kupplungseinrichtung gemäß einer siebten Ausführungsform.

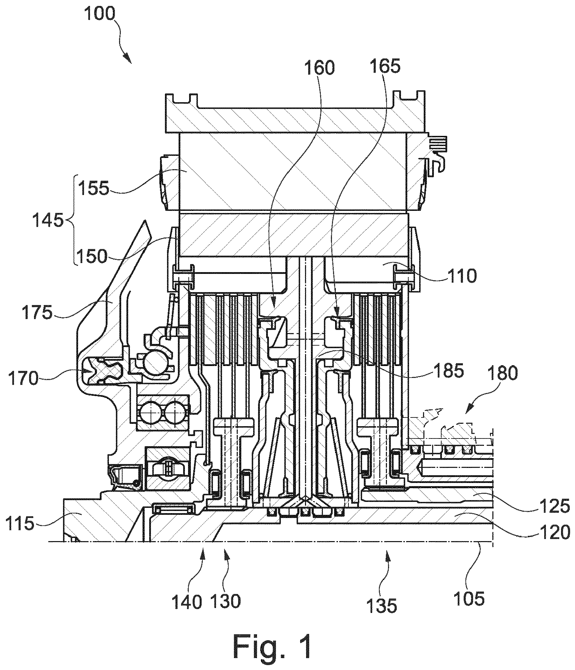

Figur 1 zeigt einen Halblängsschnitt durch eine exemplarische Kupplungseinrichtung 100. Um eine Drehachse 105 sind eine erste Eingangsseite 110, eine zweite Eingangsseite 115, eine erste Ausgangsseite 120 und eine zweite Ausgangsseite 125 angeordnet.

Eine erste Kupplung 130 liegt zwischen der ersten Eingangsseite 110 und der ersten Ausgangsseite 120, eine zweite Kupplung 135 zwischen der ersten Eingangsseite 110 und der zweiten Ausgangsseite 125 und eine dritte Kupplung 140 zwischen der ersten Eingangsseite 110 und der zweiten Eingangsseite 115. Die ersten beiden Kupplungen 130 und 135 sind bevorzugterweise axial zueinander versetzt und bilden eine axiale Doppelkupplung. Die dritte Kupplung 140 ist bevorzugterweise axial zu einer der beiden anderen Kupplungen 130 und 135 versetzt.

Die erste Eingangsseite 110 ist zur Verbindung mit einer als ersten Antriebsmotor ausgebildeten elektrischen Maschine 145 eingerichtet, die einen Läufer 150 und einen Ständer 155 umfasst. Bevorzugterweise ist die elektrische Maschine 145 vom Typ des Innenläufers, wobei der Ständer 155 radial außerhalb des Läufers 150 liegt. Dabei ist weiter bevorzugt, dass der Ständer 155 wenigstens eine Magnetspule und der Läufer 150 wenigstens einen Permanentmagneten aufweist. Der Läufer 150 liegt bevorzugterweise radial außerhalb der Kupplungen 130, 135 und 140 und ist in der dargestellten Ausführungsform mittels Nieten mit der ersten Eingangsseite 110 fest verbunden. Die zweite Eingangsseite 115 ist bevorzugterweise zur Verbindung mit einer als zweiter Antriebsmotor ausgebildeten Brennkraftmaschine, insbesondere einem Verbrennungsmotor, weiter bevorzugt einer Hubkolbenmaschine, eingerichtet.

Die Ausgangsseiten 120 und 125 sind zur Verbindung mit Eingangswellen eines Doppelgetriebes (nicht dargestellt) eingerichtet. Das Doppelgetriebe koppelt üblicherweise jede der Eingangswellen mittels eines anderen Gangradpaars mit einer gemeinsamen Ausgangswelle, die letztlich auf ein Antriebsrad des Kraftfahrzeugs wirkt. Um eine Gangstufe auszuwählen, wird entweder die erste Kupplung 130 oder die zweite Kupplung 135 geschlossen, während die jeweils andere Kupplung 125, 130 geöffnet bleibt. Bevorzugterweise umfasst das Doppelgetriebe an jeder Getriebewelle mehrere Gangradpaare, von denen zu einem Zeitpunkt nur eines eingelegt ist. Ein Gangradpaar kann üblicherweise ein- oder ausgelegt werden, wenn es mit einer Ausgangswelle 120, 125 verbunden ist, dessen zugeordnete Kupplung 130, 135 gerade geöffnet ist.

Die Kupplungseinrichtung 100 ist insbesondere dazu eingerichtet, in einem Antriebsstrang des Kraftfahrzeugs eingesetzt zu werden. Dabei kann das Kraftfahrzeug bevorzugterweise hybrid betrieben werden, also alternativ durch den Verbrennungsmotor, durch die elektrische Maschine 145 oder durch beide Antriebsmotoren. Soll der Verbrennungsmotor genutzt werden, so wird die dritte Kupplung 140 geschlossen. Soll die elektrische Maschine 145 genutzt werden, so wird sie üblicherweise elektrisch derart angesteuert, dass Drehmoment umgesetzt wird. Beide Antriebsmotoren können sowohl positives als auch negatives Drehmoment in den Antriebsstrang einbringen. Die elektrische Maschine 145 kann auch kinetische Energie aus dem Antriebsstrang aufnehmen und in elektrische Energie umwandeln, die beispielsweise in einem Energiespeicher temporär gespeichert werden kann. Durch seinen kompakten Aufbau eignet sich die Kupplungseinrichtung 100 insbesondere zum Einbau vorne quer in einem Kraftfahrzeug.

Der ersten Kupplung 130 ist eine erste Betätigungseinrichtung 160, der zweiten Kupplung 135 eine zweite Betätigungseinrichtung 165 und der dritten Kupplung 140 eine dritte Betätigungseinrichtung 170 zugeordnet. Bevorzugterweise arbeiten alle drei Betätigungseinrichtungen 160, 165 und 170 hydraulisch und sind jeweils dazu eingerichtet, eine axiale Betätigungskraft auf eine der Kupplungen 130, 135 und 140 auszuüben, sodass Reibelemente der Kupplungen 130, 135 oder 140 axial aneinander gepresst werden, um einen Reibschluss zu erzeugen und ein Drehmoment zwischen den Reibelementen zu übertragen. Bevorzugterweise werden die Reibelemente jeweils zwischen der zugeordneten Betätigungseinrichtung 160, 165, 170 und einem axialen Widerlager zusammengepresst. Weiterhin ist bevorzugt, dass die hydraulischen Betätigungseinrichtungen 160, 165 und 170 einzeln aktiv gesteuert werden können, indem mittels eines Ventils oder einer Pumpe unter Druck stehendes Medium gezielt in einen hydraulischen Arbeitsraum ein- oder aus ihm abgelassen wird. Alternativ dazu kann auch beispielsweise eine fliehölgesteuerte Betätigung vorgesehen sein.

Die drei Kupplungen 130, 135 und 140 sind bevorzugterweise in einem gemeinsamen Gehäuse 175 angeordnet, das wenigstens teilweise mit einem flüssigen Medium 180, insbesondere einem Öl, gefüllt ist. Das Medium 180 kann auch als Arbeitsmedium der hydraulischen Betätigungseinrichtungen 160, 165 und 170 verwendet werden. Die Kupplungen 130, 135 und 140 sind bevorzugterweise vom nasslaufenden Typ und können jeweils als Einscheiben- oder Mehrscheibenkupplung ausgelegt sein. Weiter bevorzugterweise sind die erste Kupplung 130 und die zweite Kupplung 135 vom Mehrscheibentyp, um ein feinfühliges Öffnen und Schließen des Drehmomentflusses durch die Kupplungen 130, 135 zu erlauben. Die dritte Kupplung 140 kann auch wie dargestellt vom Einscheibentyp sein, wobei die dritte Kupplung 140 als Schaltkupplung ausgelegt sein kann, die möglichst nicht unter Schlupf betrieben wird.

In der dargestellten Ausführungsform befindet sich axial zwischen der ersten Kupplung 130 und der zweiten Kupplung 135 ein radialer Flansch 185 als Widerlager, gegen das die Kupplungen 130, 135 mittels der jeweils zugeordneten Betätigungseinrichtung 160, 165 gepresst werden können. Betätigungskräfte der Betätigungseinrichtungen 160, 165, 170 sind bevorzugterweise innerhalb der Kupplungseinrichtung 100 abgestützt, sodass keine resultierenden Kräfte nach außen abzustützen sind.

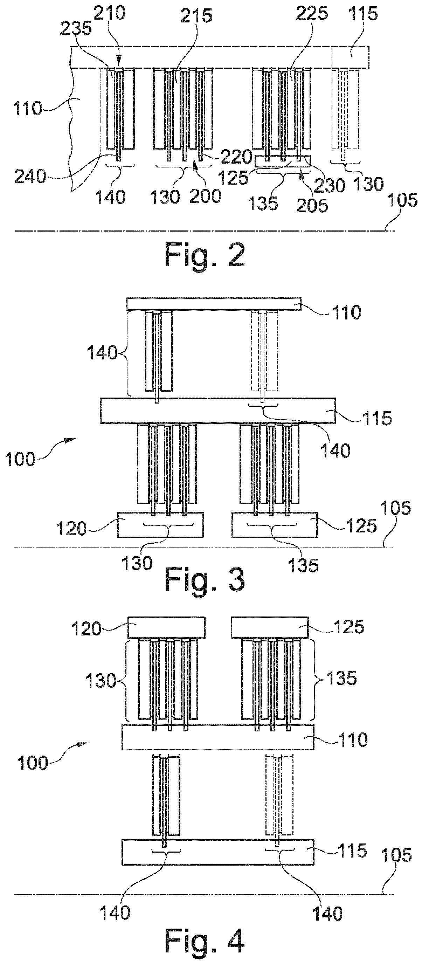

Figur 2 zeigt eine schematische Darstellung eines Halblängsschnitts der in Figur 1 gezeigten Kupplungseinrichtung 100.

Die erste Kupplung 130 weist ein erstes Reibpaket 200 auf. Die zweite Kupplung 135 weist ein zweites Reibpaket 205 und die dritte Kupplung 140 ein drittes Reibpaket 210 auf. Das erste Reibpaket 200 weist einen ersten Reibpartner 215 und einen zweiten Reibpartner 220 auf. Das zweite Reibpaket 205 weist einen dritten Reibpartner 225 und einen vierten Reibpartner 230 auf. Das dritte Reibpaket 210 weist einen fünften Reibpartner 235 und einen sechsten Reibpartner 240 auf. In der Ausführungsform beispielhaft der erste, dritte und/oder fünfte Reibpartner 215, 225, 235 als belaglose Reiblamelle ausgebildet. Selbstverständlich kann auch der erste, dritte und/oder fünfte Reibpartner 215, 225, 235 als Belagslamelle ausgebildet sein. Der zweite, vierte und/oder sechste Reibpartner 220, 230, 240 ist in der Ausführungsform bevorzugterweise als Belagslamelle ausgebildet. Auch können der zweite, vierte und sechste Reibpartner 220, 230, 240 als belaglose Reiblamelle ausgebildet sein.

Der erste und zweite Reibpartner 215, 220 des ersten Reibpakets 200 sind stapelartig zu dem ersten Reibpaket 200 abwechselnd angeordnet. Der dritte und vierte Reibpartner 225, 230 sind abwechselnd in einem Stapel aneinander angeordnet. Im dritten Reibpaket 210 sind der fünfte und sechste Reibpartner 235, 240 abwechselnd in einem Stapel angeordnet. Dabei weist das dritte Reibpaket 210 eine geringere Anzahl von fünften und/oder sechsten Reibpartnern 235, 240 auf, als das erste Reibpaket 200 und/oder das zweite Reibpaket 205 eine Anzahl von ersten und zweiten Reibpartnern 215, 220 und/oder dritten und vierten Reibpartnern 225, 230 aufweist. Dies ist dadurch bedingt, dass die elektrische Maschine 145 beispielhaft ein geringeres Drehmoment, das mit der dritten Kupplung 140 zwischen der ersten Eingangsseite 110 und der zweiten Eingangsseite 115 zu übertragen ist, überträgt als der zweite Antriebsmotor an der zweiten Eingangsseite 115 bereitstellt.

Im Folgenden wird auf die Anordnung der Kupplungen 130, 135, 140 relativ zueinander eingegangen. Dabei wird bei der Anordnung der Kupplung 130, 135, 140 jeweils auf die Position des jeweiligen Reibpaketes 200, 205, 210 der Kupplung 130, 135, 140 Bezug genommen. Weitere Komponenten der Kupplung 130, 135, 140 werden hierbei nicht weiter betrachtet.

Die erste Kupplung 130 ist in Figur 2 axial versetzt zu der zweiten Kupplung 135 angeordnet. Dabei sind die erste Kupplung 130 und die zweite Kupplung 135 radial überlappend angeordnet. Dabei wird unter einer radialen Überlappung verstanden, wenn die erste Kupplung 130 und/oder die zweite Kupplung 135 und gegebenenfalls die dritte Kupplung 140 in eine Ebene, die senkrecht zur Drehachse 105 angeordnet ist, projiziert werden und die Kupplungen 130, 135, 140 in der Ebene sich zumindest teilweise überdecken. Somit weisen die erste und die zweite Kupplung 130, 135 bei einer radialen vollständigen Überlappung einen gemeinsamen radialen Bauraum auf.

In der Ausführungsform weist die erste Kupplung 130 bevorzugterweise die gleiche radiale Erstreckung auf wie die zweite Kupplung 135. Selbstverständlich kann die erste Kupplung 130 auch radial breiter oder schmaler ausgebildet sein als die zweite Kupplung 135. In diesem Falle ist von Vorteil, wenn die erste Kupplung 130 radial zumindest teilweise überlappend, vorzugsweise vollständig überlappend, zu der zweiten Kupplung 135 angeordnet ist.

Bevorzugterweise ist axial die dritte Kupplung 140 zwischen der ersten Eingangsseite 110 und der ersten Kupplung 130 auf einer zur zweiten Kupplung 135 abgewandten Seite der ersten Kupplung 130 angeordnet. Die erste Kupplung 130 ist axial angrenzend zur zweiten Kupplung 135 angeordnet. Diese Ausgestaltung hat den Vorteil, dass der radiale Bauraum besonders gering ist. Dabei überlappt die dritte Kupplung 140 vollständig mit der ersten Kupplung 130 und der zweiten Kupplung 135. Somit ist die dritte Kupplung 140 im radialen Bauraum der ersten und zweiten Kupplung 130, 135 angeordnet. Die dritte Kupplung 140 ist axial versetzt zur zweiten Kupplung 135 und zur ersten Kupplung 130 angeordnet. Bevorzugterweise ist die dritte Kupplung 140 gleich radial breit wie die erste Kupplung 130 und die zweite Kupplung 135 ausgebildet. Auch kann die dritte Kupplung 140 radial schlanker oder breiter als die erste Kupplung 130 und/oder die zweite Kupplung 135 ausgebildet sein.

Strichliert ist in Figur 2 eine Variante der in den Figuren 1 und 2 gezeigten Anordnung der Kupplungen 130, 135, 140 skizziert. Dabei ist die dritte Kupplung 140 axial angrenzend an die zweite Kupplung 135 auf einer zur ersten Kupplung 130 abgewandten Seite angeordnet. Die erste Eingangsseite 110 kann hier ebenso auf einer zur ersten Kupplung 130 abgewandten Seite der zweiten Kupplung 135 angeordnet sein. Die erste Kupplung 130 ist axial angrenzend an die erste Eingangsseite 110 angeordnet. Die erste Eingangsseite 110 kann über nicht dargestellte Elemente mit der dritten Kupplung 140 drehmomentschlüssig verbunden sein.

Figur 3 zeigt eine schematische Darstellung eines Halblängsschnitts einer Kupplungseinrichtung 100 gemäß einer zweiten Ausführungsform. Die Kupplungseinrichtung 100 ist ähnlich zu der in den Figuren 1 und 2 gezeigten Kupplungseinrichtung 100 ausgebildet. Abweichend dazu ist die dritte Kupplung 140 radial außenseitig der ersten Kupplung 130 und der zweiten Kupplung 135 angeordnet. Bevorzugterweise ist radial zwischen der dritten Kupplung 140 und der ersten Kupplung 130, und in der Ausführungsform auch der zweiten Kupplung 135, die zweite Eingangsseite 115 angeordnet. Die erste Eingangsseite 110 ist bevorzugterweise radial außenseitig zur dritten Kupplung 140 angeordnet. Bevorzugterweise ist, wie in Figur 3 mit durchgezogenen Linien dargestellt, die dritte Kupplung 140 axial überlappend mit der ersten Kupplung 130 angeordnet. Dabei wird unter einer axialen Überlappung verstanden, wenn wenigstens zwei der Kupplungen 130, 135, 140 in eine Ebene, in der die Drehachse 105 angeordnet ist, projiziert werden und die Kupplungen 130, 135, 140 in der Ebene sich zumindest abschnittsweise überdecken. Somit weisen die erste und die dritte Kupplung 130, 140 bei einer axialen vollständigen Überlappung einen gemeinsamen axialen Bauraum auf. Radial überlappend sind hierbei die erste und zweite Kupplung 130, 135 angeordnet.

In einer Variante (strichliert dargestellt) ist die dritte Kupplung 140 radial außenseitig der zweiten Kupplung 135 angeordnet. Die dritte Kupplung 140 ist axial überlappend mit der zweiten Kupplung 135 angeordnet. Die Entscheidung, ob die dritte Kupplung 140 radial außenseitig axial überlappend mit der ersten Kupplung 130 oder axial überlappend mit der zweiten Kupplung 135 angeordnet wird, ist abhängig von einem möglichen Bauraumbedarf, sodass mit der in Figur 3 beschriebenen Anordnung die dritte Kupplung 140 flexibel an die zur Verfügung stehenden Bauraumgrenzen angepasst werden kann.

Figur 4 zeigt eine schematische Darstellung eines Halblängsschnitts einer Kupplungseinrichtung 100 gemäß einer dritten Ausführungsform. Die Kupplungseinrichtung 100 ist ähnlich zu der in Figur 3 gezeigten Kupplungseinrichtung 100 ausgebildet. Abweichend dazu ist die dritte Kupplung 140 radial innenseitig der ersten Kupplung 130 und der zweiten Kupplung 135 angeordnet. Bevorzugterweise ist die dritte Kupplung 140, mit durchgezogenen Linien dargestellt, axial überlappend mit der ersten Kupplung 130 angeordnet. Die zweite Eingangsseite 115 ist in der Ausführungsform radial innenseitig zur dritten Kupplung 140 angeordnet. Radial zwischen der dritten Kupplung 140 und der ersten Kupplung 130, und in der Ausführungsform bevorzugterweise auch der zweiten Kupplung 135, ist die erste Eingangsseite 110 angeordnet. Die erste Ausgangsseite 120 ist radial außenseitig axial überlappend mit der ersten Kupplung 130 und die zweite Ausgangsseite 125 axial überlappend mit der zweiten Kupplung 135 und radial außenseitig der zweiten Kupplung 135 angeordnet.

In einer Variante der Kupplungseinrichtung 100, die in Figur 4 strichliert dargestellt ist, ist die dritte Kupplung 140 radial innenseitig zur zweiten Kupplung 135 angeordnet. Die dritte Kupplung 140 überlappt axial mit der zweiten Kupplung 135.

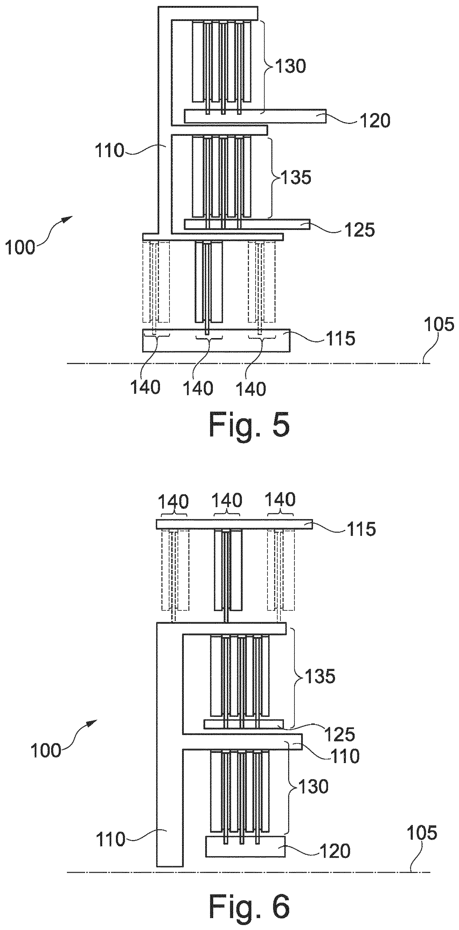

Figur 5 zeigt schematische Darstellung eines Halblängsschnitts einer Kupplungseinrichtung 100 gemäß einer vierten Ausführungsform. Die Kupplungseinrichtung 100 ist ähnlich zu der in den Figuren 1 bis 4 gezeigten Kupplungseinrichtung 100 ausgebildet.

Abweichend dazu ist die Kupplungseinrichtung 100 als radiale Kupplungseinrichtung ausgebildet. Die erste Kupplung 130 ist beispielhaft radial außenseitig mit der ersten Eingangsseite 110 gekoppelt. Radial innenseitig der ersten Kupplung 130 ist die erste Kupplung 130 mit der ersten Ausgangsseite 120 gekoppelt. Die zweite Kupplung 135 ist radial innenseitig zur ersten Kupplung 130 und bevorzugterweise axial überlappend mit der ersten Kupplung 130 angeordnet. Die zweite Kupplung 135 ist radial außenseitig beispielhaft mit der ersten Eingangsseite 110 gekoppelt, während hingegen radial innenseitig die zweite Kupplung 135 mit der zweiten Ausgangsseite 125 gekoppelt ist. Radial innenseitig zur zweiten Kupplung 135 axial überlappend mit der ersten Kupplung 130 und der zweiten Kupplung 135 ist die dritte Kupplung 140 angeordnet. Die dritte Kupplung 140 ist radial außenseitig beispielhaft mit der ersten Eingangsseite 110 gekoppelt. Radial innenseitig ist die dritte Kupplung 140 mit der zweiten Eingangsseite 115 gekoppelt. Durch die Anordnung der Kupplungen 130, 135, 140 axial überlappend kann der axial benötigte Bauraumbedarf für die Kupplungseinrichtung 100 minimiert werden.

In der Ausführungsform sind die Kupplungen 130, 135, 140 axial vollständig überlappend angeordnet. Dabei wird unter einer axialen Überlappung verstanden, dass, wenn die Kupplungen 130, 135, 140 in eine Ebene, in der die Drehachse 105 verläuft, projiziert werden, diese in der Ebene überlappen. Auch können die Kupplungen 130, 135, 140 auch nur teilweise axial überlappen.

In einer Variante, die in Figur 5 strichliert dargestellt ist, ist die dritte Kupplung 140 axial versetzt zu der ersten Kupplung 130 und/oder der zweiten Kupplung 135 angeordnet. Nach wie vor ist hierbei die dritte Kupplung 140 radial innenseitig zur ersten und zweiten Kupplung 130, 135 angeordnet. Dabei kann beispielsweise die dritte Kupplung 140 linksseitig in Richtung der ersten Eingangsseite 110 versetzt zu der ersten Kupplung 130 und/oder zweiten Kupplung 135 angeordnet sein. Alternativ kann auch die dritte Kupplung 140 rechtsseitig versetzt zur ersten Kupplung 130 und/oder zweiten Kupplung 135 angeordnet sein.

Figur 6 zeigt eine schematische Darstellung eines Halblängsschnitts einer Kupplungseinrichtung 100 gemäß einer fünften Ausführungsform. Die Kupplungseinrichtung 100 ist ähnlich zu der in Figur 5 gezeigten Kupplungseinrichtung 100 ausgebildet. Dabei ist die erste Kupplung 130 radial innenseitig zur zweiten Kupplung 135 angeordnet. Die dritte Kupplung 140 ist radial außenseitig zur zweiten Kupplung 135 angeordnet. Dabei sind die erste Kupplung 130, die zweite Kupplung 135 und die dritte Kupplung 140 axial überlappend angeordnet und überlappen axial bevorzugterweise vollständig. Die erste Ausgangsseite 120 ist radial innenseitig zur ersten Kupplung 130 angeordnet. Die zweite Ausgangsseite 125 ist radial innenseitig zur zweiten Kupplung 135 radial zwischen der zweiten Kupplung 135 und der ersten Kupplung 130 angeordnet. Die erste Eingangsseite 110 ist radial außenseitig mit der ersten Kupplung 130 und radial außenseitig mit der zweiten Kupplung 135 gekoppelt. Auch ist die erste Eingangsseite 110 radial innenseitig mit der dritten Kupplung 140 gekoppelt. Die dritte Kupplung 140 ist radial außenseitig mit der zweiten Eingangsseite 115 gekoppelt.

In einer Variante, die strichliert in Figur 6 dargestellt ist, ist die dritte Kupplung 140 axial versetzt zu der zweiten Kupplung 135 und der ersten Kupplung 130 angeordnet. Dabei kann die dritte Kupplung 140 beispielhaft nach links in Richtung der ersten Eingangsseite 110 axial versetzt angeordnet sein.

Auch ist denkbar, dass die erste Kupplung 130 axial versetzt zur zweiten Kupplung 135 angeordnet ist. Bei dieser Ausgestaltung kann die dritte Kupplung 140 axial versetzt zu der ersten Kupplung 130 und/oder der zweiten Kupplung 135 oder axial überlappend mit der zweiten Kupplung 135 oder/und axial versetzt zu der ersten Kupplung 130 angeordnet sein. Alternativ wäre auch denkbar, die dritte Kupplung 140 axial überlappend mit der ersten Kupplung 130 und axial versetzt zu der zweiten Kupplung 135 anzuordnen.

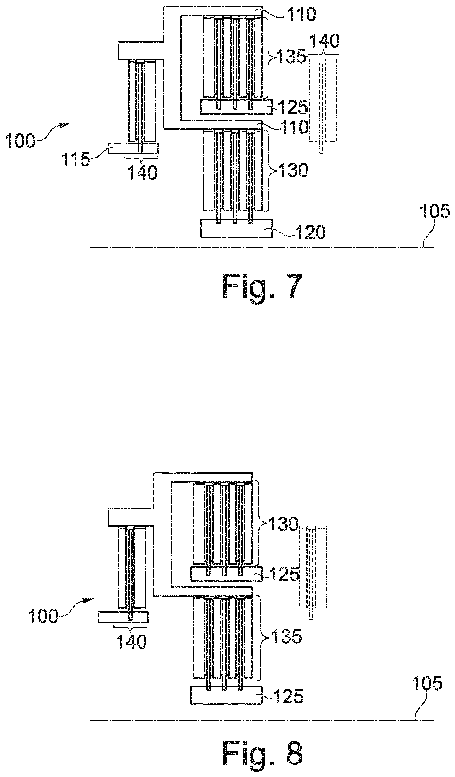

Figur 7 zeigt eine schematische Darstellung eines Halblängsschnitts einer Kupplungseinrichtung 100 gemäß einer sechsten Ausführungsform. Die Kupplungseinrichtung 100 ist ähnlich zu der in den Figuren 5 und 6 gezeigten Kupplungseinrichtung 100 ausgebildet. Dabei ist die erste Kupplung 130 radial innenseitig der zweiten Kupplung 135 angeordnet. Die erste Kupplung 130 und die zweite Kupplung 135 sind dabei axial überlappend und bevorzugterweise vollständig axial überlappend angeordnet. Dabei ist beispielhaft die erste Kupplung 130 mit der ersten Ausgangsseite 120 radial innenseitig gekoppelt. Die zweite Kupplung 135 ist beispielhaft mit der zweiten Ausgangsseite 125 radial innenseitig gekoppelt. Die erste Kupplung 130 ist radial außenseitig mit der ersten Eingangsseite 110 gekoppelt. Ebenso ist die zweite Kupplung 135 radial außenseitig mit der ersten Eingangsseite 110 gekoppelt.

Die dritte Kupplung 140 ist axial versetzt zu der ersten Kupplung 130 und der zweiten Kupplung 135 angeordnet. Ferner ist die dritte Kupplung 140 radial überlappend mit der ersten Kupplung 130 und der zweiten Kupplung 135 angeordnet. Dabei ist beispielhaft die dritte Kupplung 140 radial innenseitig mit der zweiten Eingangsseite 115 und radial außenseitig mit der ersten Eingangsseite 110 gekoppelt. Selbstverständlich ist auch denkbar, dass die dritte Kupplung 140 radial außenseitig mit der zweiten Eingangsseite 115 und radial innenseitig mit der ersten Eingangsseite 110 gekoppelt ist.

In einer Variante der in Figur 7 gezeigten Ausgestaltung der Kupplungseinrichtung 100 ist die dritte Kupplung 140 in Figur 7 auf der gegenüberliegenden Seite angeordnet. Die dritte Kupplung 140 ist hierbei ebenso radial überlappend mit der ersten Kupplung 130 und der zweiten Kupplung 135 angeordnet.

Figur 8 zeigt eine schematische Darstellung eines Halblängsschnitts einer Kupplungseinrichtung 100 gemäß einer siebten Ausführungsform. Die Kupplungseinrichtung 100 ist im Wesentlichen identisch zu der in Figur 7 gezeigten Kupplungseinrichtung 100 ausgebildet. Abweichend dazu ist die zweite Kupplung 135 radial innenseitig zur ersten Kupplung 130 angeordnet. Somit ist auch die zweite Ausgangsseite 125 radial innenseitig zur ersten Kupplung 130 und zur zweiten Kupplung 135 angeordnet. Ebenso ist die dritte Kupplung 140 radial überlappend zu der ersten und zweiten Kupplung 130, 135 angeordnet.

Es wird darauf hingewiesen, dass zusätzlich zu den in den Figuren 1 bis 8 gezeigten Ausgestaltungen der Kupplungseinrichtung 100 auch denkbar ist, dass die Kupplungen 130, 135, 140 andersartig angeordnet sind.

Auch wird darauf hingewiesen, dass die oben in den Figuren 1 bis 8 beschriebenen Merkmale der Kupplungseinrichtung 100 selbstverständlich auch andersartig miteinander kombiniert werden können. Insbesondere können über(←raus?) die in den Figuren 1 bis 8 beschriebenen Merkmale miteinander kombiniert werden.

### Bezugszeichenliste

- 100: Kupplungseinrichtung
- 105: Drehachse
- 110: erste Eingangsseite
- 115: zweite Eingangsseite
- 120: erste Ausgangsseite
- 125: zweite Ausgangsseite

- 130: erste Kupplung
- 135: zweite Kupplung
- 140: dritte Kupplung

- 145: elektrische Maschine
- 150: Läufer
- 155: Ständer

- 160: erste Betätigungseinrichtung
- 165: zweite Betätigungseinrichtung
- 170: dritte Betätigungseinrichtung

- 175: Gehäuse
- 180: flüssiges Medium
- 185: Flansch

- 200: erstes Reibpaket
- 205: zweites Reibpaket
- 210: drittes Reibpaket
- 215: erster Reibpartner
- 220: zweiter Reibpartner
- 225: dritter Reibpartner
- 230: vierter Reibpartner
- 235: fünfter Reibpartner
- 240: sechster Reibpartner

## Patentansprüche

1. Kupplungseinrichtung (100) mit:
- einer ersten (110) und einer zweiten Eingangsseite (115),
- einer ersten (120) und einer zweiten Ausgangsseite (125),
- wobei die erste Eingangsseite (110) mit einem ersten Antriebsmotor (145) und die zweite Eingangsseite (115) mit einem zweiten Antriebsmotor koppelbar ist,
- wobei die Eingangsseiten (110, 115) und die Ausgangsseiten (120, 125) um eine gemeinsame Drehachse (105) drehbar sind,
- einer ersten Kupplung (130) zwischen der ersten Eingangsseite (110) und der ersten Ausgangsseite (120),
- einer zweiten Kupplung (135) zwischen der ersten Eingangsseite (110) und der zweiten Ausgangsseite (125), und
- einer dritten Kupplung (140) zwischen der ersten Eingangsseite (110) und der zweiten Eingangsseite (115),
- wobei die dritte Kupplung (140) versetzt zu der ersten Kupplung (130) und/oder der zweiten Kupplung (135) angeordnet ist.

2. Kupplungseinrichtung (100) nach Anspruch 1,
- wobei die erste Kupplung (130) und die zweite Kupplung (135) radial zumindest abschnittsweise überlappend angeordnet sind,
- wobei axial angrenzend an die erste Kupplung (130) auf einer zur zweiten Kupplung (135) abgewandten Seite die dritte Kupplung (140) angeordnet ist,
- oder
- wobei axial angrenzend an die zweite Kupplung (135) auf einer zur ersten Kupplung (130) abgewandten Seite die dritte Kupplung (140) angeordnet ist.

3. Kupplungseinrichtung (100) nach Anspruch 1,
- wobei die erste Kupplung (130) und die zweite Kupplung (135) radial zumindest abschnittsweise überlappend angeordnet sind,
- wobei radial innenseitig zur ersten Kupplung (130) die dritte Kupplung (140) angeordnet ist, und wobei axial zumindest abschnittsweise die erste Kupplung (130) und die dritte Kupplung (140) überlappend angeordnet sind,
- oder wobei radial innenseitig zur zweiten Kupplung (135) die dritte Kupplung (140) angeordnet ist und wobei axial zumindest abschnittsweise die dritte Kupplung (140) mit der zweiten Kupplung (125) überlappend angeordnet ist.

4. Kupplungseinrichtung (100) nach Anspruch 1,
- wobei die erste Kupplung (130) und die zweite Kupplung (135)) radial zumindest abschnittsweise überlappend angeordnet sind,
- wobei radial außenseitig zur ersten Kupplung (130) die dritte Kupplung (140) angeordnet ist und wobei axial die erste Kupplung (130) und die dritte Kupplung (140) überlappend angeordnet sind,
- oder wobei radial außenseitig zur zweiten Kupplung (135) und axial zumindest abschnittsweise die dritte Kupplung (140) mit der zweiten Kupplung (125) überlappend angeordnet ist.

5. Kupplungseinrichtung (100) nach Anspruch 1,
- wobei die erste Kupplung (130) und die zweite Kupplung (135) axial zumindest abschnittsweise überlappend angeordnet sind,
- wobei die erste Kupplung (130) radial versetzt zu der zweiten Kupplung (135) angeordnet ist
- wobei die dritte Kupplung (140) radial innenseitig zur ersten Kupplung (130) und/oder radial innenseitig zur zweiten Kupplung (135) angeordnet ist,
- wobei vorzugsweise die dritte Kupplung (140) axial versetzt zu der ersten Kupplung (130) und/oder der zweiten Kupplung (135) angeordnet ist
- oder wobei vorzugsweise die dritte Kupplung (140) axial zumindest abschnittsweise überlappend mit der ersten Kupplung (135) angeordnet ist.

6. Kupplungseinrichtung (100) nach Anspruch 1,
- wobei die erste Kupplung (130) und die zweite Kupplung (135) radial versetzt zueinander angeordnet sind,
- wobei die erste Kupplung (130) und die zweite Kupplung (135) axial zumindest abschnittsweise überlappend angeordnet sind,
- wobei die dritte Kupplung (140) axial versetzt zu der ersten und der zweiten Kupplung (130, 135) angeordnet ist,
- wobei die dritte Kupplung (140) radial überlappend mit der ersten Kupplung (130) und der zweiten Kupplung (135) angeordnet ist.

7. Kupplungseinrichtung (100) nach Anspruch 5 oder 6, wobei die erste Kupplung (130) radial außenseitig oder radial innenseitig zu der zweiten Kupplung (140) (135) angeordnet ist.

8. Kupplungseinrichtung (100) nach Anspruch 1, wobei die dritte Kupplung (140) axial versetzt zu der ersten Kupplung (130) und/oder der zweiten Kupplung (135) angeordnet ist.

9. Kupplungseinrichtung (100) nach Anspruch 1 oder 2, wobei die dritte Kupplung (140) radial versetzt zu der ersten Kupplung (130) und/oder der zweiten Kupplung (135) angeordnet ist.

10. Kupplungseinrichtung (100) nach einem der vorangehenden Ansprüche, wobei der erste Antriebsmotor als elektrische Maschine (145) und der zweite Antriebsmotor als Brennkraftmaschine ausgebildet ist.
